(19) Europäisches Patentamt
European Patent Office
Office européen des brevets

(11) **EP 3 326 150 B1**

(12) **FASCICULE DE BREVET EUROPEEN**

(45) Date de publication et mention de la délivrance du brevet:
**04.12.2019 Bulletin 2019/49**

(21) Numéro de dépôt: **16741575.1**

(22) Date de dépôt: **11.07.2016**

(51) Int Cl.:
*G06T 7/73* (2017.01)    *G06T 5/20* (2006.01)
*G06T 5/50* (2006.01)    *G06T 5/00* (2006.01)

(86) Numéro de dépôt international:
**PCT/EP2016/066409**

(87) Numéro de publication internationale:
**WO 2017/012899 (26.01.2017 Gazette 2017/04)**

(54) **PROCÉDÉ DE VISUALISATION D'UN SPOT LASER**

VERFAHREN ZUM ANZEIGEN EINES LASERFLECKS

METHOD FOR DISPLAYING A LASER SPOT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2015 FR 1556900**

(43) Date de publication de la demande:
**30.05.2018 Bulletin 2018/22**

(73) Titulaire: **Safran Electronics & Defense**
**92100 Boulogne-Billancourt (FR)**

(72) Inventeurs:
• **ROUX, Nicolas**
**92100 Boulogne Billancourt (FR)**
• **FOUBERT, Philippe**
**92100 Boulogne Billancourt (FR)**
• **PATRY, Philippe**
**92100 Boulogne Billancourt (FR)**
• **GUISET, Pierrick**
**92100 Boulogne Billancourt (FR)**

• **TOUATI, Thierry**
**92100 Boulogne Billancourt (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 2 560 129    WO-A2-2012/128862**
**FR-A1- 2 982 393    FR-A1- 3 013 878**

• **GOUDAIL F ET AL: "SOME PRACTICAL ISSUES IN ANOMALY DETECTION AND EXPLOITATION OF REGIONS OF INTEREST IN HYPERSPECTRAL IMAGES", APPLIED OPTICS, OPTICAL SOCIETY OF AMERICA, WASHINGTON, DC; US, vol. 45, no. 21, 20 juillet 2006 (2006-07-20), pages 5223-5236, XP001245429, ISSN: 0003-6935, DOI: 10.1364/AO.45.005223 cité dans la demande**

EP 3 326 150 B1

**Description**

L'invention concerne un procédé de visualisation d'un spot laser dans une image multi-spectrale représentative d'une scène, et un dispositif mettant en œuvre ledit procédé.

Il est devenu courant d'utiliser des dispositifs de génération d'un spot laser, ou dispositif laser, tels que par exemple des désignateurs ou des pointeurs laser, pour désigner des objets ou des cibles dans des scènes. Un dispositif laser produit un faisceau laser, de manière continue ou intermittente avec une fréquence prédéfinie, qui, lorsqu'il touche un objet désigné, produit un point lumineux, appelé spot laser, visible dans différentes bandes spectrales. Lesdites bandes spectrales peuvent comprendre des bandes spectrales situées :

- dans le domaine du visible (VIS) comprenant des longueurs d'onde allant de 0,38 à 0,78 micromètres ($\mu m$),
- dans le proche infrarouge (« Near Infra Red (NIR) » en terminologie anglo-saxonne) (0,78 à 1$\mu m$)
- dans l'infrarouge à longueurs d'onde courte (« Short-wavelength infrared (SWIR) » en terminologie anglo-saxonne (1 à 2,5 $\mu m$)
- dans l'infrarouge à longueurs d'onde moyennes (« Medium-wavelength Infrared (MWIR) » en terminologie anglo-saxonne) (2,5 à 5$\mu m$)
- dans l'infrarouge à longueurs d'onde longues (« Long-wavelength Infrared (LWIR) » en terminologie anglo-saxonne) (5 à 14$\mu m$)

Un spot laser produit par un dispositif laser peut être visualisé par un opérateur à l'œil nu lorsqu'il est situé dans le domaine du visible, ou en utilisant un système de visualisation adapté lorsque le spot laser se situe dans un domaine infrarouge comme par exemple, un système d'observation aéroporté, des jumelles numériques, des lunettes à réalité augmentée ou encore un viseur numérique. Dans ce cas, une image de la scène comprenant le spot laser est alors fourni à l'opérateur par le système de visualisation. Il est connu qu'une bonne visualisation d'un spot laser dépend de conditions d'illumination de la scène observée. C'est ainsi que visualiser un spot laser dans une image pose peu de problèmes dans un environnement faiblement éclairé, comme par exemple, de nuit. Par contre, une telle visualisation peut s'avérer difficile dans un environnement subissant un éclairage moyen à important, comme par exemple de jour ou dans un environnement éclairé par un éclairage artificiel. C'est ainsi que des jumelles à vision nocturne (JVN) ne sont pas utilisables en journée pour détecter un spot laser. Un spot laser peut aussi être difficilement détectable par des systèmes utilisant une voie VNIR et/ou SWIR non filtrée dans un environnement subissant un éclairage moyen à important.

Par ailleurs, bon nombre de dispositifs laser utilisent une diode laser pour générer un faisceau laser. Le faisceau laser est généré avec une longueur d'onde dépendant de caractéristiques de la diode laser. Il est connu que des variations de température de fonctionnement d'une diode laser entraînent une dérive de la longueur d'onde du faisceau laser (et donc du spot laser) produit par la diode laser. Des valeurs classiques de longueur d'onde $\lambda$ d'un faisceau laser généré par une diode laser sont par exemple « 0,808 $\mu m$, » « 0,830 $\mu m$ », « 0,852 $\mu m$ » ou « 0,860 $\mu m$ » à une température de « 20°C ». Ces longueurs d'onde peuvent varier d'une valeur $\Delta\lambda$ par rapport à la longueur d'onde $\lambda$ selon une loi linéaire en fonction d'une valeur de variation de température $\Delta T$ par rapport à la température de fonctionnement de « 20°C ».

$$\Delta\lambda = \alpha.\,\Delta T$$

où $\alpha$ est une constante allant de « 0,1 nanomètre (nm)/°C » à « 0,5 nm/°C » pour des diodes laser générant des faisceaux laser ayant une longueur d'onde située dans le domaine NIR ou le domaine SWIR.

Or, un dispositif laser comportant une diode laser peut être utilisé dans des conditions de températures très variables allant de « -40°C » à « 70°C », notamment lorsqu'il est installé sur un dispositif aéroporté.

De plus, des vieillissements de la diode laser peuvent provoquer des générations de faisceau laser ne correspondant plus à une seule longueur d'onde mais plutôt à une bande étroite couvrant plusieurs longueurs d'onde.

Il devient alors difficile de définir un système de visualisation adapté au spot laser généré par le dispositif laser puisque ce spot laser ne se situe pas dans une bande spectrale bien définie, ni même constante. C'est ainsi que des systèmes de détection de spot laser, par exemple basés sur une voie vidéo non filtrée ou sur une voie vidéo filtrée (telle qu'une voie vidéo VNIR/SWIR), adaptés pour détecter un spot laser dans des conditions de température données, peuvent s'avérer inefficaces pour d'autres conditions de température du fait d'une dérive de la longueur d'onde du spot laser.

Il est souhaitable de pallier ces inconvénients de l'état de la technique.

La publication de Goudail F et AL intitulée « Some practical issues in anomaly détection and exploitation of régions of interest in hyperspectral images » publiée dans applied opptics, optical society of America, Washington DC, vol 45 no 21 le 20 juillet 2006 divulgue une méthode de détection d'anomalies et l'exploitation de régions d'intérêt dans des images hyper spectrales.

Il est notamment souhaitable de proposer une méthode et un dispositif permettant une visualisation efficace d'un spot laser dans des conditions d'illumination correspondant à un éclairage moyen à important. Il est de plus souhaitable que la méthode et le dispositif proposés aient une efficacité constante malgré des dérives de longueur d'onde d'un faisceau laser produit par un dispositif laser due à des variations de températures de fonctionnement dudit dispositif laser.

Selon un premier aspect de l'invention, l'invention concerne un procédé de visualisation d'un spot laser compris dans une image multi-spectrale, comprenant une pluralité de composantes et représentative d'un champ optique, le spot laser étant produit par un dispositif laser et ayant une longueur d'onde prenant des valeurs dans une plage de longueurs d'onde dépendant de températures de fonctionnement du dispositif laser. Le procédé comprend : obtenir une image multi-spectrale dans laquelle chaque composante correspond à un même instant d'acquisition et est représentative d'une bande spectrale d'une pluralité de bandes spectrales couvrant de manière continue un domaine spectral comprenant ladite plage de longueurs d'onde; appliquer une procédure d'accentuation de contraste à une première fenêtre correspondant à une sous partie de l'image multi-spectrale comprenant le spot laser, la procédure d'accentuation de contraste comprenant: définir dans la première fenêtre un premier masque adapté pour contenir des pixels de l'image multi-spectrale correspondant au spot laser et un second masque adapté pour contenir des pixels de l'image multi-spectrale ne correspondant pas au spot laser ; et, déterminer un vecteur représentatif d'une direction de projection de Fisher permettant d'accentuer un contraste entre les pixels du premier et du second masque et appliquer une projection selon ledit vecteur à la première fenêtre pour obtenir une deuxième fenêtre; si le spot laser apparait dans la deuxième fenêtre, sélectionner une première bande spectrale offrant le meilleure contraste entre les pixels du premier et du second masque, la bande spectrale sélectionnée correspondant à l'une des coordonnées du vecteur représentatif de la direction de projection de Fisher ayant une valeur supérieure aux autres valeurs de coordonnées, et former une troisième fenêtre à partir d'une composante de la première fenêtre correspondant à la première bande spectrale sélectionnée ; générer une image permettant une visualisation du spot laser en insérant la troisième fenêtre à une position correspondant à la première fenêtre dans une image réceptrice représentative du champ optique.

Ledit procédé permet donc d'améliorer la visualisation du spot laser malgré des dérives de la longueur d'onde du spot laser dues à des variations de température et quel que soit les conditions d'éclairement.

Selon un mode de réalisation, une comparaison d'une valeur représentative d'un contraste entre les pixels du premier et du second masque dans la deuxième fenêtre avec un premier seuil, permet de déterminer si le spot laser apparaît dans la deuxième fenêtre.

Selon un mode de réalisation, des valeurs représentatives d'un contraste entre les pixels du premier et du second masque dans chaque bande spectrale sont utilisées pour sélectionner la bande spectrale offrant le meilleur contraste entre les pixels du premier et du second masque, lesdites valeurs représentatives d'un contraste comprenant des valeurs de coordonnées dudit vecteur.

Selon un mode de réalisation, les valeurs de coordonnées dudit vecteur sont des valeurs de coordonnées normalisées sur une plage de valeur prédéfinie.

Selon un mode de réalisation, lesdites valeurs représentatives d'un contraste comprennent en outre des valeurs de rapport signal à bruit calculées pour chaque bande spectrale.

Selon un mode de réalisation, une valeur de sélection est calculée pour chaque bande spectrale à partir de chaque valeur représentative d'un contraste correspondant à ladite bande spectrale, la première bande spectrale étant sélectionnée en prenant une bande spectrale de la pluralité de bandes spectrale associée à une valeur de sélection la plus élevée parmi les valeurs de sélection calculées.

Selon un mode de réalisation, le procédé comprend, sélectionner une seconde bande spectrale, ladite seconde bande spectrale étant associée à une valeur de contraste entre les pixels du premier et du second masque inférieure à un second seuil et former une quatrième fenêtre à partir d'une composante de la première fenêtre correspondant à la seconde bande spectrale sélectionnée, l'image permettant une visualisation du spot laser étant générée en insérant la troisième ou la quatrième fenêtre dans une image réceptrice représentative du champ optique.

Selon un mode de réalisation, l'image multi-spectrale est générée à partir d'une pluralité d'imagettes représentatives du champ optique ayant un même instant d'acquisition et harmonisées spatialement, chaque imagette correspondant à une bande spectrale de la pluralité de sous-bandes spectrales.

Selon un mode de réalisation, au moins deux imagettes de la pluralité d'imagettes correspondent à une même bande spectrale et sont représentatives d'un faisceau lumineux correspondant à ladite bande spectrale polarisé selon une polarisation différente, de sorte que lors de la sélection de la première bande spectrale offrant le meilleur contraste entre les pixels du premier et du second masque, la polarisation offrant le meilleur contraste entre les pixels du premier et du second masque est aussi sélectionnée.

Selon un mode de réalisation, la procédure d'accentuation de contraste est appliquée à une pluralité de premières fenêtres correspondant à des sous parties différentes de l'image multi-spectrale, au moins une première fenêtre de ladite pluralité comprenant le spot laser et en ce qu'une deuxième fenêtre est sélectionnée suivant un critère prédéfini parmi les secondes fenêtres obtenues lors de chaque application de la procédure d'accentuation de contraste, la seconde fenêtre sélectionnée étant utilisée pour sélectionner la première bande spectrale.

Selon un mode de réalisation, au moins une caractéristique de la première bande spectrale permet de déterminer un type de dispositif laser.

Selon un deuxième aspect de l'invention, l'invention concerne un procédé de visualisation d'un spot laser compris dans des images multi-spectrales acquises avec une fréquence d'images prédéfinie, caractérisé en que le procédé comprend : mettre en œuvre le procédé selon le premier aspect pour chaque image multi-spectrale.

Selon un mode de réalisation, une position d'au moins une première fenêtre est définie dans une image multi-spectrale, dite image courante, en fonction d'une position d'une seconde fenêtre dans laquelle apparaît le spot laser dans une image multi-spectrale précédent l'image courante.

Selon un mode de réalisation, une fréquence du spot laser est déterminée sur une pluralité d'images multi-spectrales successives, la fréquence du spot laser étant utilisée pour déterminer le type du dispositif laser.

Selon un mode de réalisation, l'image permettant une visualisation du spot laser est générée en alternant une insertion de la troisième ou la quatrième fenêtre dans une image réceptrice représentative du champ optique avec une fréquence d'alternance prédéfinie inférieure ou égale à la fréquence d'image prédéfinie.

Selon un troisième aspect de l'invention, l'invention concerne un dispositif permettant une visualisation d'un spot laser compris dans une image multi-spectrale, comprenant une pluralité de composantes et représentative d'un champ optique, le spot laser étant produit par un dispositif laser et ayant une longueur d'onde prenant des valeurs dans une plage de longueurs d'onde dépendant de températures de fonctionnement du dispositif laser. Le dispositif comprend : des moyens d'obtention pour obtenir une image multi-spectrale dans laquelle chaque composante correspond à un même instant d'acquisition et est représentative d'une bande spectrale d'une pluralité de bandes spectrales couvrant de manière continue un domaine spectral comprenant ladite plage de longueurs d'onde; des moyens d'application pour appliquer une procédure d'accentuation de contraste à une première fenêtre correspondant à une sous-partie de l'image multi-spectrale comprenant le spot laser, lesdits moyens d'application comprenant: des moyens de définition pour définir dans la première fenêtre un premier masque adapté pour contenir des pixels de l'image multi-spectrale correspondant au spot laser et un second masque adapté pour contenir des pixels de l'image multi-spectrale ne correspondant pas au spot laser ; et, des moyens de détermination pour déterminer un vecteur représentatif d'une direction de projection de Fisher permettant d'accentuer un contraste entre les pixels du premier et du second masque et des moyens pour appliquer une projection selon ledit vecteur à la première fenêtre pour obtenir une deuxième fenêtre; des moyens de sélection pour sélectionner une première bande spectrale offrant le meilleur contraste entre les pixels du premier et du second masque et des moyens pour former une troisième fenêtre à partir d'une composante de la première fenêtre correspondant à la première bande spectrale sélectionnée ; et, des moyens de génération pour générer une image permettant une visualisation du spot laser en insérant la troisième fenêtre à une position correspondant à la première fenêtre dans une image réceptrice représentative du champ optique. Selon un quatrième aspect de l'invention, l'invention concerne un programme d'ordinateur, comprenant des instructions pour mettre en œuvre, par un dispositif, le procédé selon le premier aspect ou le deuxième aspect, lorsque ledit programme est exécuté par un processeur dudit dispositif.

Selon un cinquième aspect de l'invention, l'invention concerne des moyens de stockage, stockant un programme d'ordinateur comprenant des instructions pour mettre en œuvre, par un dispositif, le procédé selon le premier ou le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de contexte dans lequel l'invention peut être mise en œuvre ;
- la Fig. 2A illustre schématiquement un exemple de dispositif d'acquisition d'images compris dans un système de visualisation ;
- la Fig. 2B illustre schématiquement un exemple d'architecture matérielle d'un module de traitement compris dans un système de visualisation ;
- la Fig. 3A illustre schématiquement un exemple d'image produite par un capteur d'images du dispositif d'acquisition d'images;
- la Fig. 3B illustre schématiquement un exemple d'ensemble de bandes spectrales couvrant de manière continue un domaine spectral;
- la Fig. 4 illustre schématiquement un procédé de visualisation d'un spot laser dans une image multi-spectrale selon l'invention ;
- la Fig. 5A illustre schématiquement une étape de définition d'une fenêtre d'accentuation de contraste dans une image multi-spectrale ; et,
- la Fig. 5B illustre schématiquement une étape de définition de masques utilisés dans une procédure permettant d'accentuer un contraste entre un spot laser et un fond.

L'invention est décrite par la suite dans un contexte d'un système de visualisation comprenant un boîtier intégrant un dispositif d'acquisition d'images, un module de traitement, un dispositif de visualisation d'images tel qu'un écran et un dispositif laser. L'invention s'applique aussi dans un contexte plus large. L'invention s'applique notamment lorsque le dispositif d'acquisition d'images, le dispositif de visualisation d'images, le module de traitement et le dispositif laser du système de visualisation sont des éléments séparés et distants géographiquement, chaque dispositif pouvant être fixe ou mobile et manipulé par des opérateurs différents. Les opérateurs peuvent collaborer pour désigner et visualiser une cible, ou un opérateur manipulant le dispositif d'acquisition d'images peut pointer ledit dispositif sur un spot laser généré par un dispositif laser manipulé par un autre opérateur avec lequel il ne collabore pas.

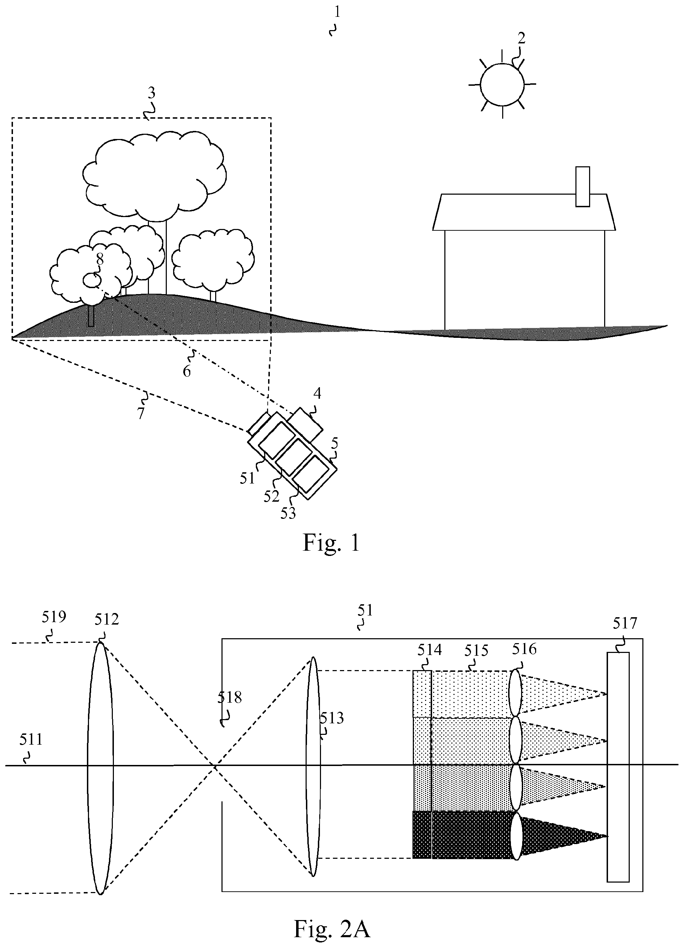

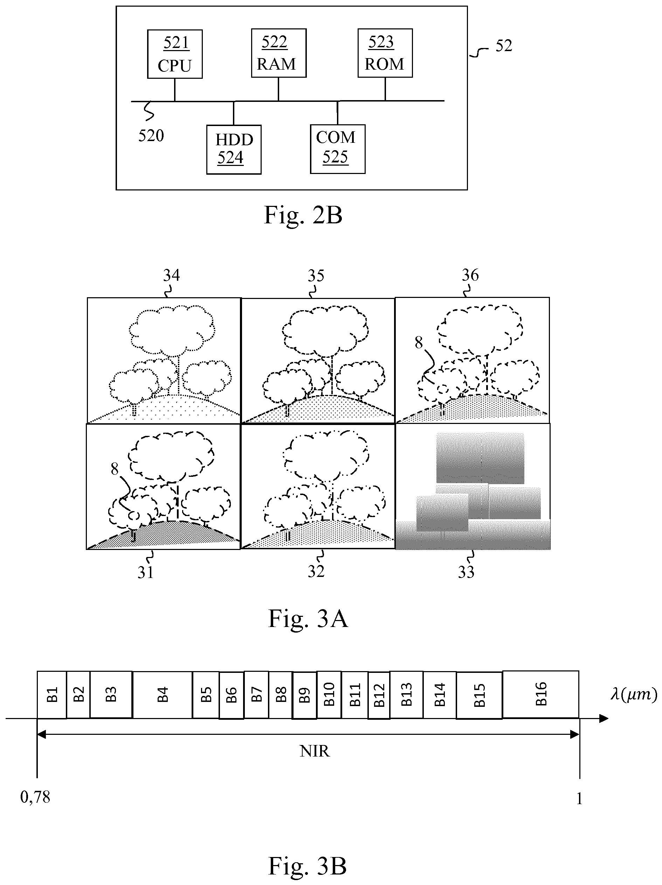

La Fig. 1 illustre schématiquement un exemple de contexte dans lequel l'invention peut être mise en œuvre. Un opérateur (non représenté) observe une scène 1 éclairée par un éclairage moyen à important (symbolisée par le soleil 2) à partir d'un système de visualisation 5. Le système de visualisation 5 comprend un dispositif d'acquisition d'images 51, un module de traitement 52 et un dispositif de visualisation d'images 53. Le dispositif d'acquisition d'images 51 est par exemple de type système d'acquisition vidéo et permet d'acquérir une pluralité d'images 3 représentatives d'un champ optique 7. Le champ optique 7 est étroit, *i.e.* le champ optique possède un angle de 2° à 5°. La pluralité d'images 3 est par exemple acquise avec une fréquence d'images de « 25 » à « 30 » images par secondes. Chaque image 3 fournie par le dispositif d'acquisition d'images 51 est une image multi-spectrale dont nous détaillons des caractéristiques en relation avec la Fig. 3A. Nous détaillons le dispositif d'acquisition d'images 51 en relation avec la Fig. 2A.

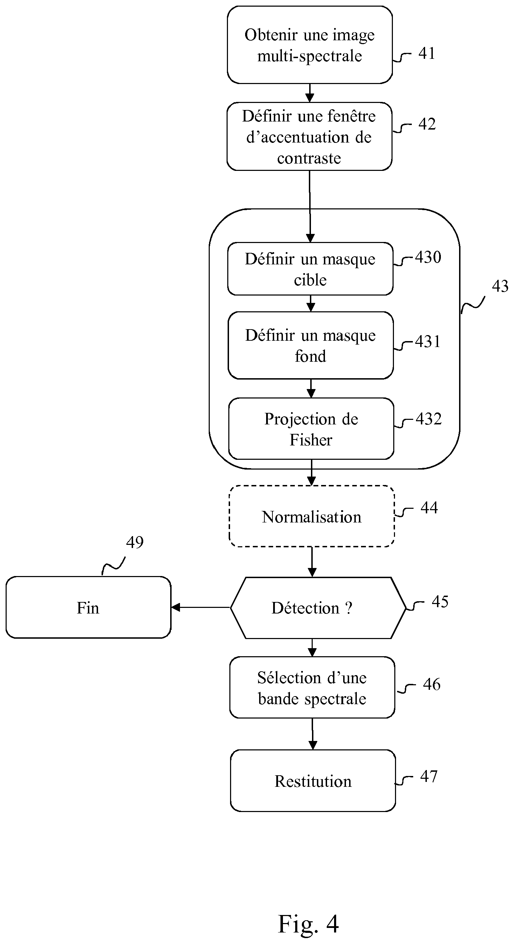

Le module de traitement 52 reçoit des images multi-spectrales du dispositif d'acquisition d'images 51 et leur applique un traitement que nous décrivons en relation avec la Fig. 4. Nous détaillons le module de traitement 52 en relation avec la Fig. 2B.

Pour chaque image multi-spectrale, le module de traitement 52 produit au moins une image permettant la visualisation d'un spot laser 8, dite image de restitution, dans laquelle le spot laser 8 est clairement identifiable et fournit cette image au dispositif de visualisation d'images 53 qui l'affiche. Le dispositif de visualisation d'images 53 est par exemple un écran ou un œilleton du système de visualisation 5.

Dans l'exemple de la Fig. 1, un dispositif laser 4 est fixé sur le système de visualisation 5. Ce dispositif laser 4 comprend une diode laser générant un faisceau laser 6 ayant par exemple une longueur d'onde $\lambda$ égale à « 0,860 $\mu m$ » à une température de « 20°C ». Cette longueur d'onde varie d'une valeur $\Delta\lambda$ selon une loi linéaire en fonction d'une valeur de variation $\Delta T$ de la température de fonctionnement de la diode laser par rapport à la température de « 20°C ».

$$\Delta\lambda = \alpha.\Delta T$$

où $\alpha$ est une constante égale « 0,3 nm/°C ». Par exemple à « 0°C » la longueur d'onde $\lambda$ = 0,854 $\mu m$.

. Le dispositif laser 4 permet à un opérateur manipulant le système de visualisation 5 de désigner une cible à l'aide du spot laser 8 produit lorsque le faisceau laser 6 rencontre un objet (par exemple, ici un bosquet).

La **Fig. 2A** illustre schématiquement un exemple de dispositif d'acquisition d'images compris dans un système de visualisation.

Le dispositif d'acquisition d'images 51 reçoit un faisceau lumineux 519 qu'il redirige vers un capteur d'images 517 pour créer une pluralité d'images multi-spectrales 3. Pour ce faire le dispositif d'acquisition d'images 51 comprend une lentille primaire 512, un diaphragme de champ 518, une lentille secondaire 513, une matrice de filtres 514, une matrice de mini lentilles 516 et le capteur d'images 517.

La lentille primaire 512, le diaphragme de champ 518, la lentille secondaire 513, la matrice de filtres 514, la matrice de mini lentilles 516, et le capteur d'images 517 sont perpendiculaires à un axe optique 511. L'ensemble lentille primaire 512, diaphragme 518, lentille secondaire 513 génère un faisceau lumineux collimaté à partir du faisceau lumineux 519, le faisceau collimaté étant représentatif du champ optique 7 ayant un angle faible de l'ordre de 5°. Le faisceau lumineux collimaté est reçu par la matrice de filtres 514. La matrice de filtres 514 est composée d'une pluralité de filtres décomposant le faisceau lumineux 519 en une pluralité de bandes spectrales. Par exemple, la matrice de filtres 514 comprend « 16 » filtres aptes à décomposer le faisceau lumineux en « 16 » bandes spectrales. Fournir un faisceau lumineux collimaté représentatif d'un champ optique ayant un angle faible permet d'obtenir une matrice de filtres composée de filtres très sélectifs en bandes spectrales et ayant un fort taux de rejection hors bande. Nous décrivons les « 16 » bandes spectrales par la suite en relation avec la Fig. 3B. Une pluralité de sous faisceaux lumineux 515 est alors générée en sortie de la matrice de filtres 514 correspondant chacun à une des bandes spectrales de la pluralité de bandes spectrales. Dans l'exemple décrit en relation avec la Fig. 2A, « 16 » sous faisceaux lumineux sont générées. Chaque sous faisceau lumineux de la pluralité de sous faisceaux lumineux 515 est ensuite dirigé vers une zone du capteur d'images 517 par une mini lentille de la matrice de mini lentilles 516. La matrice de mini lentilles 516 comporte donc autant de mini lentilles que de bandes spectrales générées par la matrice de filtres 514 (*i.e.* « 16 » mini lentilles). Le capteur d'images 517 est par exemple un capteur CCD (« Charge-Coupled Device » en terminologie anglo-saxonne, dispositif à transfert de charge) ou un capteur CMOS (« Complementarity metal-oxide-semiconductor », en terminologie anglo-saxonne, semi-conducteur métal-oxyde complémentaire) comprenant une matrice de photosites aptes à transformer des photons lumineux incidents en un signal électrique. Un échantillonnage du signal électrique à la fréquence d'images du dispositif d'acquisition d'images 51 permet de former un pixel pour chaque photosite. Dans un mode de réalisation le capteur d'images 517 est une matrice carrée de (4 x 500) x (4 x 500) photosites aptes à produire des images comprenant (4 x 500) x (4 x 500) pixels. Chaque image produite par le dispositif d'acquisition d'images 51 est fournie au module de traitement 52.

Dans un mode de réalisation, la matrice de filtres 514 comprend aux moins deux filtres identiques. Dans ce mode de réalisation, un polariseur différent est positionné devant chaque filtre identique, de sorte que chaque filtre identique produit un sous faisceau lumineux représentatif d'une même bande spectrale mais ayant une polarisation différente. L'utilisation de polariseur permet de mieux détecter des spots laser ayant été émis avec une certaine polarisation.

La **Fig. 2B** illustre schématiquement un exemple d'architecture matérielle d'un module de traitement compris dans un système de visualisation.

Selon l'exemple d'architecture matérielle représenté à la Fig. 2B, le module de traitement 52 comprend alors, reliés par un bus de communication 520 : un processeur ou CPU (« Central Processing Unit » en anglais) 521 ; une mémoire vive RAM (« Random Access Memory » en anglais) 522 ; une mémoire morte ROM (« Read Only Memory » en anglais) 523 ; une unité de stockage telle qu'un disque dur ou un lecteur de support de stockage, tel qu'un lecteur de cartes SD (« Secure Digital » en anglais) 524 ; au moins une interface de communication 525 permettant au module de traitement de communiquer avec le dispositif d'acquisition d'images 51 et/ou le dispositif de visualisation d'images 53.

Dans un mode de réalisation dans lequel le dispositif d'acquisition d'images 51, le module de traitement 52 et dispositif de visualisation 53 sont séparés et distants, le dispositif d'acquisition d'images 51 et le dispositif de visualisation 53 comprennent aussi une interface de communication pouvant communiquer avec l'interface de communication 525 par l'intermédiaire d'un réseau tel qu'un réseau sans fils.

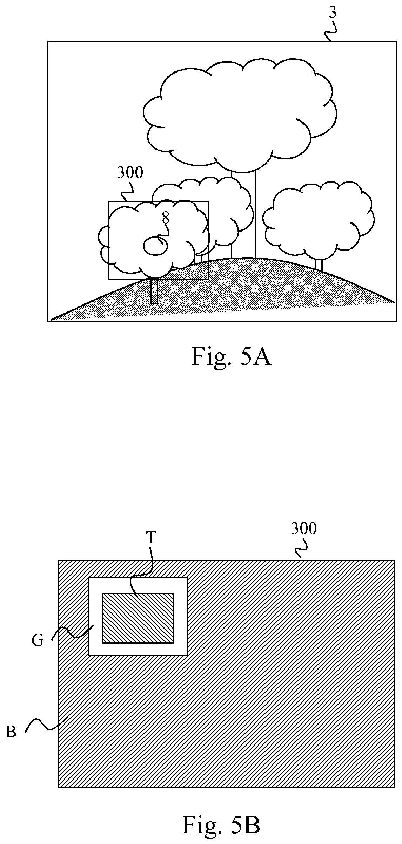

Le processeur 521 est capable d'exécuter des instructions chargées dans la RAM 522 à partir de la ROM 523, d'une mémoire externe (non représentée), d'un support de stockage (tel qu'une carte SD), ou d'un réseau de communication. Lorsque le module de traitement 52 est mis sous tension, le processeur 521 est capable de lire de la RAM 522 des instructions et de les exécuter. Ces instructions forment un programme d'ordinateur causant la mise en œuvre, par le processeur 521, de tout ou partie du procédé décrit ci-après en relation avec les Figs. 4, 5A et 5B.

Le procédé décrit ci-après en relation avec les Figs. 4, 5A et 5B peut être implémenté sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

On note que dans un mode de réalisation le module de traitement 52 fonctionne à la fréquence d'images du dispositif d'acquisition d'image 51. Le module de traitement 52 traite donc chaque image multi-spectrale produite par le dispositif d'acquisition d'images 51.

La **Fig. 3A** illustre schématiquement un exemple d'image produite par un capteur d'images 517 du dispositif d'acquisition d'images 51.

L'image décrite en relation avec la Fig. 3A est une image telle qu'elle est obtenue en sortie du dispositif d'acquisition d'images 51. Dans un mode de réalisation, cette image prend la forme d'une matrice d'imagettes 31 à 36. Chaque imagette résulte d'une focalisation sur le capteur d'images 517 par une mini lentille de la matrice de mini lentilles 516 d'un sous faisceau lumineux de la pluralité de sous faisceaux lumineux 515 fournie par la matrice de filtres 514. Dans un mode de réalisation, chaque imagette 31 à 36 correspond à une bande spectrale de la pluralité de bandes spectrales et est représentative du champ optique 7. En fonction de la longueur d'onde du faisceau laser 6, le spot laser 8 est généralement visible dans une à trois bandes spectrales contiguës de la pluralité de bandes spectrales (une apparition du spot laser 8 dans plus de trois bandes spectrales est toutefois possible). Le spot laser 8 apparait donc généralement dans une à trois imagettes 31 à 36. Dans l'exemple décrit en relation avec la Fig. 3A, le spot laser 8 est visible dans l'imagette 31 et l'imagette 36, les imagettes 31 et 36 représentant des bandes spectrales contiguës. Par contre, le spot laser 8 est peu visible voire invisible dans les imagettes 32, 33, 34 et 35.

Dans l'exemple de la Fig. 3A, pour simplifier la représentation, la matrice d'imagettes est composée de « 6 » imagettes contiguës. Dans l'exemple où la pluralité de bandes spectrales comprend « 16 » bandes spectrales et où le capteur d'images 517 comprend (4 × 500) × (4 × 500) photosites, la matrice d'imagettes comprend 4 colonnes de 4 imagettes de taille 500 x 500 pixels.

On note que, dès qu'il reçoit une image en provenance du dispositif d'acquisition d'images 51, le module de traitement 52 transforme cette image en une image multi-spectrale 3. Pour ce faire, le module de traitement 52 met en correspondance chaque pixel situé à une même position spatiale dans chaque imagette, afin d'obtenir une image multi-spectrale 3 ayant la taille d'une imagette et dans laquelle chaque pixel possède un nombre de composantes égal au nombre de bandes spectrales de la pluralité de bandes spectrales. Chaque composante de chaque pixel correspond donc à une valeur dudit pixel dans une bande spectrale.

On suppose ici que les imagettes 31 à 36 de la matrice d'imagettes sont harmonisées spatialement, *i.e.* les imagettes sont recalées entre elles de manière à ce que tous les pixels situés à une même position spatiale dans les imagettes 31 à 36 correspondent à une même position spatiale dans la scène 1.

De plus, on note que chaque composante d'un pixel de l'image multi-spectrale 3 correspond à un même instant temporel puisque toutes les imagettes ayant fourni une composante ont été acquises par le même capteur d'images 517 au même instant.

Obtenir une image multi-spectrale 3 dans laquelle chaque composante de pixel correspond à un même instant temporel permet de ne pas avoir à gérer des variations de luminosité dans la scène entre les composantes (*i.e.* les bandes spectrales). De plus, une acquisition de l'ensemble des imagettes 31 à 36 de la matrice d'imagettes par un même capteur à un même instant temporel permet d'obtenir des imagettes sur lesquelles un même gain spectro-spatial a été appliqué, de garantir un taux de remplissage des pixels associés au spot laser 8 et de garantir un contraste entre les pixels associés au spot laser 8 et des pixels correspondant au fond (i.e. pixel n'appartenant pas au spot laser 8) par exemple de l'ordre de 15dB.

Dans un mode de réalisation, au moins deux imagettes contigües de la matrice d'imagettes ont une intersection non vide. Dans ce cas, pour éviter toute incohérence, chaque pixel d'une imagette appartenant à une intersection entre au moins deux imagettes est ignoré lors de la création de l'image multi-spectrale 3.

Dans le mode de réalisation où au moins deux filtres de la matrice de filtres 514 sont identiques et précédés de polariseurs différents, au moins deux imagettes correspondent à la même bande spectrale mais représentent des polarisations différentes du même sous faisceau lumineux. Chaque pixel de l'image multi-spectrale possède alors au moins deux composantes correspondant à la même bande spectrale mais représentent des polarisations différentes.

La **Fig. 3B** illustre schématiquement un exemple d'ensemble de bandes spectrales couvrant de manière continue un domaine spectral.

Une particularité des bandes spectrales utilisées dans l'invention est qu'elles couvrent de manière continue un domaine spectral. Le domaine spectral se situe, par exemple, dans le domaine du proche infrarouge (NIR). Comme nous l'avons vu plus haut, la longueur d'onde du spot laser 8 dépend d'une température de fonctionnement du dispositif laser 4. La longueur d'onde du dispositif laser 4 prend donc des valeurs dans une plage de longueurs d'ondes dépendant de températures de fonctionnement prévues pour le dispositif laser 4. Le domaine spectral comprend donc ladite plage de longueurs d'onde dans laquelle peut se situer le spot laser 8. Chaque bande spectrale correspond à une des bandes spectrales fournies par la matrice de filtres 514. Selon l'exemple décrit plus haut, le domaine spectral est donc décomposé en 16 bandes spectrales B1 à B16. Les bandes spectrales sont de largeurs variables. La largeur de chaque bande spectrale peut par exemple être adaptée en fonction de parties du domaine spectral dans laquelle de la précision est souhaitée. Une bande spectrale étroite peut par exemple être définie dans une partie du domaine spectral où le spot laser est attendu.

Dans un mode de réalisation, les bandes spectrales sont de largeurs égales.

Dans un mode de réalisation, le domaine spectral se situe entre « 0,7 $\mu m$ » et « 1,1 $\mu m$ », dans ce cas la largeur des bandes spectrales est de « 25 nm », ou entre « 0,72 $\mu m$ » et « 0,88 $\mu m$ » ; dans ce cas la largeur des bandes spectrales est de « 10 nm », ou entre « 0,78 $\mu m$ » et « 0,94 $\mu m$ » ; dans ce cas la largeur des bandes spectrales est de « 10 nm ».

Dans un mode de réalisation le domaine spectral se situe entre « 0,8 $\mu m$ » et « 1,55 $\mu m$ », dans ce cas la largeur des bandes spectrales est de « 25 nm » et dispositif d'acquisition d'images 51 est adapté pour fournir « 25 » bandes spectrales.

Dans un mode de réalisation, au moins deux sous-bandes spectrales de la pluralité de sous-bandes spectrales ont une intersection non vide.

La **Fig. 4** illustre schématiquement un procédé de visualisation d'un spot laser dans une image multi-spectrale selon l'invention.

Un objectif du procédé décrit en relation avec la Fig. 4, est de fournir à un opérateur regardant le dispositif de visualisation d'images 53, une image dans laquelle des pixels correspondant au spot laser 8 se distinguent clairement par rapport à un fond de l'image, le fond dans une image étant considéré ici comme tout pixel de ladite image ne correspondant pas au spot laser 8. Pour ce faire, ledit procédé est basé sur une procédure d'accentuation de contraste.

Dans une étape 41, le module de traitement 52 obtient une image multi-spectrale 3 du dispositif d'acquisition d'images 51.

Dans une étape 42, le module de traitement 52 définit une fenêtre d'accentuation de contraste 300 correspondant à une sous partie de l'image multi-spectrale 3 comprenant le spot laser 8. La fenêtre d'accentuation de contraste 300 est utilisée pour accentuer localement, dans l'image multi-spectrale 3, un contraste entre les pixels de l'image multi-spectrale 3 correspondant au spot laser 8 et les pixels de l'image multi-spectrale 3 correspondant au fond. La **Fig. 5A** illustre schématiquement une étape de définition d'une fenêtre d'accentuation de contraste dans une image multi-spectrale. La Fig. 5A représente l'image multi-spectrale 3 dans laquelle est positionnée la fenêtre d'accentuation de contraste 300. La fenêtre d'accentuation de contraste 300 est positionnée de telle sorte qu'elle comprenne le spot laser 8. Dans un mode de réalisation, un opérateur positionne la fenêtre d'accentuation de contraste 300 de manière à ce que cette fenêtre comprenne le spot laser 8. De plus, l'opérateur fixe la forme et la taille de la fenêtre d'accentuation de contraste 300 en fonction, par exemple, d'un contexte dans lequel se situe le spot laser 8. Un exemple de critère permettant de fixer la forme et la taille de la fenêtre d'accentuation de contraste 300 est par exemple que, en dehors du spot laser 8, la fenêtre d'accentuation de contraste 300 soit la plus homogène possible. Dans un mode de réalisation, l'opérateur définit une fenêtre d'accentuation de contraste 300 carré de cent pixels de côté. Lors de l'étape 42, des coordonnées de la fenêtre d'accentuation de contraste 300 dans l'image multi-spectrale 3, telles que les coordonnées du pixel en haut à gauche de ladite fenêtre, et la taille de la dite fenêtre sont sauvegardées en mémoire par le module de traitement 52.

Dans une étape 43, le module de traitement applique une procédure d'accentuation de contraste comprenant des étapes 430, 431 et 432.

Lors de l'étape 430, le module de traitement 52 définit un masque de pixels adapté pour contenir les pixels de l'image multi-spectrale 3 correspondant au spot laser 8, appelé masque cible *T*. Connaissant des caractéristiques du dispositif laser 4, il est possible de connaître la taille du spot laser 8 dans l'image multi-spectrale 3. De cette manière, il est possible d'adapter la forme et/ou la taille du masque cible *T* à la forme et la taille du spot laser 8. Dans un mode de réalisation, le masque cible *T* est carré et la taille du masque cible *T* dépend de la taille du spot laser 8. Dans un mode de réalisation, trois masques cibles *T* sont à la disposition du module de traitement 52, un masque carré de trois pixels de côté, un masque carré de cinq pixels de côté et un masque carré de sept pixels de côté. Le module de traitement 52 choisit alors le masque cible *T* le plus petit pouvant contenir intégralement le spot laser 8, la taille du spot laser 8 étant un paramètre donné par l'opérateur.

Lors de l'étape 431, le module de traitement 52 définit un masque de pixels correspondant au fond dans la fenêtre 300 (*i.e.* un masque de pixels ne correspondant pas au spot laser 8), appelé masque fond *B*. Dans un mode de réalisation, le masque fond *B* est un masque complémentaire du masque cible *T, i.e.* tous les pixels de la fenêtre d'accentuation de contraste 300 qui n'appartiennent pas au masque cible *T* appartiennent au masque fond *B*.

Dans un mode de réalisation, une zone *G* correspondant à une bande de quelques pixels autour du masque cible *T* sépare le masque cible *T* du masque fond *B*. La zone *G* permet d'éviter de prendre en compte, lors d'une accentuation de contraste, des pixels mal définis, *i.e.* des pixels ne pouvant pas être clairement définis comme appartenant au spot laser 8 ou au fond. Le masque fond *B* correspond donc à tous les pixels de la fenêtre 300 n'appartenant ni au masque cible *T*, ni à la zone *G*. La **Fig. 5B** illustre schématiquement une étape de définition de masques cible *T* et fond *B* utilisées dans une procédure permettant d'accentuer un contraste entre un spot laser et un fond. Un masque cible *T* rectangulaire est placé en haut à gauche de la fenêtre d'accentuation de contraste 300. Le masque cible *T* est entouré d'une zone *G*. Un masque fond *B* correspond à tous les pixels de la fenêtre d'accentuation de contraste 300 n'appartenant ni au masque cible *T*, ni à la zone *G*.

Lors de l'étape 432, le module de traitement 52 applique une projection de Fisher aux pixels de la fenêtre d'accentuation de contraste 300. Un procédé d'application d'une projection de Fisher décrit dans l'article « some practical issues in anomaly detection and exploitation of regions of interest in hyperspectral images » de F. Goudail et al., applied optics, Vols. 45, No. 21, pp. 5223-5236,

est utilisé. Le procédé d'application d'une projection de Fisher permet d'accentuer le contraste entre les pixels appartenant au masque cible *T* et les pixels appartenant au masque fond *B*. Ce procédé consiste à projeter chaque pixel de la fenêtre d'accentuation de contraste 300 sur une direction optimale d'un espace multidimensionnel où chaque dimension correspond à des valeurs d'intensité dans une bande spectrale de l'image multi-spectrale 3. Dans l'exemple décrit plus haut dans lequel chaque pixel de l'image multi-spectrale 3 comprend « 16 » valeurs d'intensité (i.e. une valeur d'intensité par bande spectrale), l'espace multidimensionnel est un espace à « 16 » dimensions. On suppose ici que les valeurs dans chaque bande spectrale de chaque pixel correspondant au masque *T* (respectivement au masque fond *B),* sont des variables aléatoires, spatialement non corrélées, et ayant une densité de probabilité Gaussienne de moyenne $m_T$ (respectivement $m_B$) et de matrice de covariance $\Gamma$. L'article précité mentionne des procédés d'estimation de la moyenne $m_T$ (respectivement $m_B$) et de la matrice de covariance $\Gamma$.

La direction optimale de projection, représentée par un vecteur u, peut être déterminée à partir de la matrice de covariance $\Gamma$ selon la formule suivante :

$$u = \Gamma^{-1}(m^T - m^B)$$

où $m^T$ (respectivement $m^B$) est un pixel moyen représentatif des pixels correspondant au masque *T* (respectivement au masque *B*).

$$m^T = \left\{ m_1^T, m_{2,}^T, \ldots, m_K^T \right\}$$

$$m^B = \left\{ m_1^B, m_{2,}^B, \ldots, m_K^B \right\}$$

où $m_k^T$ (respectivement $m_k^B$ ), avec *k* E [1; *K*], est une valeur d'intensité du pixel moyen $m^T$ (respectivement $m^B$) dans une bande spectrale *k*, et *K* est le nombre de sous-bandes spectrales dans la pluralité de bandes spectrales (ici *K*=16).

$$m_k^T = \frac{1}{N_k^T} \sum_{i \in T} p_k^T(i)$$

$$m_k^B = \frac{1}{N_k^B} \sum_{i \in B} p_k^B(i)$$

où $p_k^T(i)$ (respectivement $p_k^B(i)$ ) est une valeur d'intensité dans une bande spectrale *k* d'un *i*eme pixel $p^T(i)$

correspondant au masque cible *T* (respectivement au masque fond *B),* et $N_k^T$ est un nombre de pixels correspondant au masque cible *T* (respectivement au masque fond *B*).

La projection selon le vecteur *u* est la projection de Fisher et revient à rechercher une corrélation maximale entre des variations de valeurs d'intensité présentes dans les bandes spectrales de la pluralité de bandes spectrales.

Chaque pixel *p(i)* de la fenêtre d'accentuation de contraste 300 est projeté selon la projection de Fisher :

$$f(i) = u^T . p(i)$$

où *f(i)* est un pixel d'une fenêtre de projection de Fisher *F* correspondant à un résultat d'une application de la projection de Fisher sur la fenêtre d'accentuation de contraste 300. La fenêtre de projection de Fisher *F* est de forme et de taille identique à la fenêtre d'accentuation de contraste 300.

Suite à la mise en œuvre de l'étape 432, le module de traitement 52 a obtenu le vecteur u représentant la direction de projection optimale et la fenêtre de projection de Fisher *F.*

Dans une étape 45, le module de traitement 52 détermine si un spot laser apparait dans la fenêtre de projection de Fisher *F.* Pour ce faire, le module de traitement 52 calcule une valeur représentative du contraste entre les pixels du masque cible *T* et les pixels du masque fond *B* dans la fenêtre de projection de Fisher *F.* Une valeur représentative du contraste entre les pixels du masque cible *T* et les pixels du masque fond *B* dans la fenêtre de projection de Fisher *F* peut-être calculée sous forme d'un rapport signal à bruit de la manière suivante :

$$C = \sqrt{\frac{\left(m^T - m^B\right)^2}{\left(\sigma^B\right)^2}}$$

où $\sigma^B$ est un écart type des valeurs d'intensité des pixels correspondant au masque *B* dans la fenêtre de projection de Fisher *F*, et $m^T$ (respectivement $m^B$) est une moyenne des valeurs d'intensité des pixels du masque cible *T* (respectivement du masque fond *B*). Le module de traitement 52 compare ensuite le rapport signal à bruit *C* à un rapport signal à bruit seuil $C_s$. Le rapport signal à bruit seuil $C_s$ peut être fixé par exemple de sorte à garantir un contraste entre les pixels associés au spot laser 8 et des pixels correspondant au fond de l'ordre de 15dB. Lorsque *C* < $C_s$ le module de traitement détermine qu'aucun spot laser n'apparait dans la fenêtre de projection de Fisher *F*. Dans ce cas le module de traitement 52 met en œuvre une étape 49 au cours de laquelle le module de traitement met fin au procédé de visualisation d'un spot laser pour la fenêtre d'accentuation de contraste 300 définie lors de l'étape 42.

Lorsque $C \geq C_s$ le module de traitement détermine qu'un spot laser apparait dans la fenêtre de projection de Fisher *F*. Dans ce cas le module de traitement met en œuvre une étape 46.

Lors de l'étape 46, le module de traitement sélectionne une bande spectrale, dite meilleure bande spectrale, offrant le meilleure contraste entre les pixels du masque cible *T* et les pixels du masque fond *B* en utilisant au moins un résultat de la procédure d'accentuation de contraste mise en œuvre lors de l'étape 43. La procédure d'accentuation de contraste a permis d'obtenir le vecteur *u* représentant la direction de projection optimale. Le vecteur *u* possède autant de dimensions que de composantes de l'image multi-spectrale. Dans le mode de réalisation ou l'image multi-spectrale possède « 16 » composantes, le vecteur *u* est un vecteur à « 16 » dimensions. Lorsque chaque composante correspond à une bande spectrale différente, chaque dimension du vecteur *u* correspond à une desdites bandes spectrales. Chaque dimension du vecteur *u* est associée à une valeur de coordonnées. Lorsqu'une valeur de coordonnées est très supérieure aux autres valeurs de coordonnées, on peut considérer que la bande spectrale associée à la dimension du vecteur *u* correspondante est celle qui offre le meilleure contraste entre les pixels du masque cible *T* et les pixels du masque fond *B*. Dans certains cas plusieurs valeurs de coordonnées sont égales et supérieures aux autres valeurs de coordonnées. Dans ce cas, une quelconque des bandes spectrales associée aux dimensions du vecteur *u* correspondante donne un bon contraste entre les pixels du masque cible *T* et les pixels du masque fond *B*. Dans un mode de réalisation, le module de traitement 52 sélectionne la bande spectrale associée à la valeur de coordonnée du vecteur *u* la plus élevée. Lorsque plusieurs valeurs de coordonnées sont égales et supérieures aux autres valeurs de coordonnées, le module de traitement 52 sélectionne aléatoirement une bande spectrale correspondant à l'une des valeurs de coordonnées du vecteur *u* supérieure aux autres valeurs de coordonnées. La bande spectrale ainsi sélectionnée devient la meilleure bande spectrale.

Dans une étape 47, le module de traitement 52 génère une image de restitution comprenant le spot laser 8 et destinée à être affichée par le dispositif de visualisation d'images 53.

Pour ce faire, le module de traitement 52 forme une fenêtre mono-spectrale (*i.e.* fenêtre où chaque pixel possède une composante) en extrayant de la fenêtre d'accentuation de contraste 300, la composante correspondant à la meilleure bande spectrale sélectionnée lors de l'étape 46. La fenêtre mono-spectrale est ensuite insérée dans une image réceptrice représentative de la scène 1 à une position correspondant à la position de la fenêtre d'accentuation de contraste 300.

Dans un mode de réalisation, l'image réceptrice est une imagette de la matrice d'imagettes. L'imagette choisie peut par exemple être une imagette dans laquelle le spot laser 8 n'apparaît pas ou peu telle que par exemple les imagettes 32, 33, 34 ou 35, ou dans une imagette dans laquelle le contraste entre les pixels du spot laser 8 et les pixels du fond est important.

Dans un mode de réalisation, le module de traitement 52 reconstruit une image réceptrice à partir d'un sous-ensemble de bandes spectrales de la pluralité de bandes spectrales.

Dans un mode de réalisation, l'image réceptrice est fournie par un autre dispositif d'acquisition d'images fournissant par exemple des images représentatives du domaine du visible ou par un dispositif d'acquisition d'images thermiques, les images fournies par l'autre dispositif d'acquisition d'images ou par le dispositif d'acquisition d'images thermiques étant représentatives du champ optique 7.

L'image de restitution est ensuite affichée à un opérateur par l'intermédiaire du dispositif de visualisation d'images 53.

Dans un mode de réalisation, lors d'une étape 44, le module de traitement 52 normalise le vecteur $u$ de manière à obtenir un vecteur normalisé $u_n$ ayant des valeurs de coordonnées situées sur une même plage de valeurs, par exemple, entre zéro et un. Le vecteur normalisé $u_n$ est ensuite utilisé lors de l'étape 45 pour sélectionner la meilleure bande spectrale. L'utilisation de valeurs de coordonnées normalisées permet une comparaison plus efficace desdites valeurs de coordonnées et ainsi de déterminer plus rigoureusement la valeur de coordonnées la plus élevée.

Dans un mode de réalisation, le module de traitement calcule une valeur représentative d'un contraste entre les pixels du masque cible $T$ et les pixels du masque fond $B$ pour chaque composante de la fenêtre d'accentuation de contraste 300 sous forme d'un rapport signal à bruit $C_k$ :

$$C_k = \sqrt{\frac{(m_k^T - m_k^B)^2}{(\sigma_k^B)^2}}$$

où $\sigma_k^B$ est un écart type des valeurs d'intensité des pixels correspondant au masque $B$ dans la sous-bande spectrale $k$.

Dans ce mode de réalisation, lors de l'étape 46, le module de traitement 52 sélectionne la meilleure bande spectrale sur la base des coordonnées du vecteur normalisé $u_n$ et des valeurs $C_k$ calculées. Dans un mode de réalisation, le module de traitement calcule pour chaque bande spectrale une valeur, dite valeur de sélection, correspondant à une combinaison linéaire entre la valeur de coordonnées du vecteur normalisé $u_n$ et la valeur $C_k$ associées à ladite bande spectrale. Dans un mode de réalisation, la valeur de sélection pour une bande spectrale correspond à un résultat d'une pondération de la valeur de coordonnées du vecteur normalisé $u_n$ associée à ladite bande spectrale par la valeur $C_k$ associée à ladite bande spectrale.

Dans un mode de réalisation, lors de l'étape 46, le module de traitement 52 sélectionne une seconde bande spectrale dans laquelle le spot laser 8 n'apparaît pas ou peu. Cette seconde bande spectrale est par exemple une bande spectrale pour laquelle la valeur représentative du contraste $C_k$ associée à ladite bande spectrale est inférieure à un second rapport signal à bruit seuil $C'_s$. Le second rapport signal à bruit seuil $C'_s$ peut être fixé par exemple de sorte à garantir un contraste entre les pixels associés au spot laser 8 et des pixels correspondant au fond inférieur à « 2dB ». Dans un mode de réalisation, la seconde bande spectrale est une bande spectrale de la pluralité de bandes spectrales pour laquelle $C_k < C'_s$ la plus proche possible de la meilleure bande spectrale. Dans ce mode de réalisation, lors de l'étape 47 le module de traitement 52 forme une seconde fenêtre mono-spectrale en extrayant de la fenêtre d'accentuation de contraste 300, la composante correspondant à la seconde bande spectrale. Le module de traitement 52 sélectionne ensuite quelle fenêtre mono-spectrale insérer dans l'image réceptrice. Par exemple, pour chaque image multi-spectrale, le module de traitement 52 fournit une image réceptrice comprenant la première ou la seconde fenêtre mono-spectrale de manière à ce que le dispositif de visualisation d'images 53 affiche alternativement une image réceptrice comprenant la première ou la seconde fenêtre mono-spectrale avec une fréquence prédéfinie inférieure ou égale à la fréquence d'image du dispositif d'acquisition d'images. Par exemple, le module de traitement fournit une image réceptrice comprenant une première fenêtre mono-spectrale pendant une seconde puis une image réceptrice comprenant une seconde fenêtre mono-spectrale pendant une seconde, et ainsi de suite. En affichant alternativement les deux fenêtres mono-spectrales, on permet à un opérateur de mieux identifier le spot laser 8 et d'avoir une meilleure compréhension de la scène dans laquelle apparait le spot laser 8, et notamment de différencier le spot laser 8 de reflets spéculaires locaux dans ladite scène.

Dans un mode de réalisation, dit mode automatique, ce n'est pas un opérateur qui définit la position de la fenêtre d'accentuation de contraste 300 et la position du masque cible $T$. Plusieurs positions de la fenêtre d'accentuation de contraste 300 sont testées successivement dans l'image multi-spectrale 3 par le module de traitement 52. Par exemple, la fenêtre d'accentuation de contraste 300 est déplacée dans l'image multi-composante 3 de sorte que chaque pixel de l'image multi-spectrale 3 apparaisse au moins une fois dans la fenêtre d'accentuation de contraste 300. Pour chaque position de la fenêtre d'accentuation de contraste 300 testée, le module de traitement met en œuvre la procédure d'accentuation de contraste décrite en relation avec l'étape 43.

Dans ce cas, lors de l'étape 430, le masque cible *T* est défini automatiquement de manière à ce qu'il soit positionné au centre de la fenêtre d'accentuation de contraste 300. Suite à la mise en œuvre de la procédure d'accentuation de contraste, le module de traitement 52 sélectionne une des fenêtres de projection de Fisher *F* obtenues et applique létape 45en utilisant les résultats de la projection de Fisher correspondant à la fenêtre de projection de Fisher *F* sélectionnée. Par exemple, le module de traitement 52 sélectionne la fenêtre de projection de Fisher *F* affichant le plus fort contraste entre les pixels correspondant au masque cible *T* et les pixels correspondant au masque fond *B*. Dans ce cas on considère que la fenêtre de projection de Fisher *F* affichant le plus fort contraste entre les pixels correspondant au masque cible *T* et les pixels correspondant au masque fond *B* est parmi toutes les fenêtres de projection de Fisher *F*, celle qui permet d'obtenir la meilleure image de restitution possible. Les étapes 46 et 47 sont appliquées par la suite.

Dans un mode de réalisation du mode automatique, le module de traitement tire profit des corrélations temporelles entre les images multi-spectrales successives pour définir des positions de la fenêtre d'accentuation de contraste 300 où rechercher le spot laser 8. Dans ce mode de réalisation, les différentes positions de la fenêtre d'accentuation de contraste 300 testées par le module de traitement 52 dans une image multi-spectrale se situent au voisinage de la position de la fenêtre de projection de Fisher *F* affichant le plus fort contraste entre les pixels correspondant au masque cible T et les pixels correspondant au masque fond B dans l'image multi-spectrale précédente. Dans un mode de réalisation, le module de traitement 52 ne teste qu'une position de la fenêtre d'accentuation de contraste 300 dans une image-multi-spectrale correspondant à la position de la fenêtre de projection de Fisher *F* affichant le plus fort contraste entre les pixels correspondant au masque cible T et les pixels correspondant au masque fond B dans l'image multi-spectrale précédente.

Dans un mode de réalisation, suite à l'identification de la meilleure bande spectrale, le module de traitement 52 détermine le type du dispositif laser 4 ayant produit le spot laser 8. Pour ce faire, le module de traitement 52 possède en mémoire un ensemble de bandes spectrales, chacune associée à un type de dispositif laser connu. En comparant, les caractéristiques de la meilleure bande spectrale aux caractéristiques des bandes spectrales dudit ensemble, le module de traitement 52 peut déterminer le type du dispositif laser 4. Dans ce mode de réalisation, lorsque le spot laser 8 est un spot laser intermittent, le module de traitement détermine la fréquence du spot laser 8 sur plusieurs images multi-spectrales successives. On suppose ici que la fréquence d'images du dispositif d'acquisition d'images 51 est suffisamment supérieure à la fréquence du spot laser 8 pour capter chaque apparition du spot laser 8. Dans ce cas, le module de traitement stocke aussi en mémoire des informations représentatives de fréquences de spot laser de types de dispositifs laser connus. Le module de traitement peut ainsi déterminer plus finement le type du dispositif laser 4 en utilisant les caractéristiques de la meilleure bande spectrale et la fréquence du spot laser 8.

**Revendications**

1. Procédé de visualisation d'une anomalie (8) comprise dans une image (3) comprenant une pluralité de composantes et représentative d'un champ optique (7), le procédé comprend :

   obtenir (41) une image (3) dans laquelle chaque composante correspond à un même instant d'acquisition et est représentative d'une bande spectrale d'une pluralité de bandes spectrales couvrant de manière continue un domaine spectral comprenant ladite plage de longueurs d'onde;
   appliquer (43) une procédure d'accentuation de contraste à une première fenêtre (300) correspondant à une sous partie de l'image comprenant l'anomalie (8), la procédure d'accentuation de contraste comprenant :

      définir (430, 431) dans la première fenêtre (300) un premier masque adapté pour contenir des pixels de l'image correspondant à l'anomalie (8) et un second masque adapté pour contenir des pixels de l'image ne correspondant pas à l'anomalie (8) ; et, déterminer (432) un vecteur représentatif d'une direction de projection de Fisher permettant d'accentuer un contraste entre les pixels du premier et du second masque et appliquer une projection selon ledit vecteur à la première fenêtre (300) pour obtenir une deuxième fenêtre;

   **caractérisé en ce que** l'anomalie est un spot laser produit par un dispositif laser (4) et ayant une longueur d'onde prenant des valeurs dans une plage de longueurs d'onde dépendant de températures de fonctionnement du dispositif laser (4), l'images est multi-spectrale et **en ce que** le procédé comprend :

      si le spot laser (8) apparaît dans la deuxième fenêtre, sélectionner (46) une première bande spectrale offrant le meilleur contraste entre les pixels du premier et du second masque en utilisant au moins un résultat de la procédure d'accentuation de contraste, la bande spectrale sélectionnée correspondant à l'une des coordonnées du vecteur représentatif de la direction de projection de Fisher ayant une valeur supérieure aux autres valeurs de coordonnées, et former une troisième fenêtre à partir d'une composante de la première fenêtre correspondant à la première bande spectrale sélectionnée ;

générer (47) une image permettant une visualisation du spot laser (8) en insérant la troisième fenêtre à une position correspondant à la première fenêtre dans une image réceptrice représentative du champ optique (7).

2. Procédé selon la revendication 1, **caractérisé en ce qu'**une comparaison d'une valeur représentative d'un contraste entre les pixels du premier et du second masque dans la deuxième fenêtre avec un premier seuil permet de déterminer si le spot laser (8) apparaît dans la deuxième fenêtre.

3. Procédé selon la revendication 1 ou 2, **caractérisé en ce que** des valeurs représentatives d'un contraste entre les pixels du premier et du second masque dans chaque bande spectrale sont utilisées pour sélectionner la bande spectrale offrant le meilleur contraste entre les pixels du premier et du second masque, lesdites valeurs représentatives d'un contraste comprenant des valeurs de coordonnées dudit vecteur.

4. Procédé selon la revendication 1, **caractérisé en ce que** les valeurs de coordonnées dudit vecteur sont des valeurs de coordonnées normalisées sur une plage de valeurs prédéfinie.

5. Procédé selon la revendication 3 ou 4, **caractérisé en ce que** lesdites valeurs représentatives d'un contraste comprennent en outre des valeurs de rapport signal à bruit calculées pour chaque bande spectrale.

6. Procédé selon la revendication 3, 4 ou 5, **caractérisé en ce que**, une valeur de sélection est calculée pour chaque bande spectrale à partir de chaque valeur représentative d'un contraste correspondant à ladite bande spectrale, la première bande spectrale étant sélectionnée en prenant une bande spectrale de la pluralité de bandes spectrales associée à une valeur de sélection la plus élevée parmi les valeurs de sélection calculées.

7. Procédé selon l'une quelconque des revendications précédentes, **caractérisé en ce que** le procédé comprend, sélectionner une seconde bande spectrale, ladite seconde bande spectrale étant associée à une valeur de contraste entre les pixels du premier et du second masque inférieure à un second seuil et former une quatrième fenêtre à partir d'une composante de la première fenêtre correspondant à la seconde bande spectrale sélectionnée, l'image permettant une visualisation du spot laser (8) étant générée en insérant la troisième ou la quatrième fenêtre dans une image réceptrice représentative du champ optique (7).

8. Procédé selon l'une quelconque des revendications précédentes, **caractérisé en ce que** l'image multi-spectrale est générée à partir d'une pluralité d'imagettes représentatives du champ optique (7) ayant un même instant d'acquisition et harmonisées spatialement, chaque imagette correspondant à une bande spectrale de la pluralité de sous-bandes spectrales.

9. Procédé selon la revendication 8, **caractérisé en ce que** au moins deux imagettes de la pluralité d'imagettes correspondent à une même bande spectrale et sont représentatives d'un faisceau lumineux correspondant à ladite bande spectrale polarisé selon une polarisation différente, de sorte que lors de la sélection de la première bande spectrale offrant le meilleur contraste entre les pixels du premier et du second masque, la polarisation offrant le meilleur contraste entre les pixels du premier et du second masque est aussi sélectionnée.

10. Procédé selon l'une quelconque des revendications précédentes, **caractérisé en ce que** la procédure d'accentuation de contraste est appliquée à une pluralité de premières fenêtres (300) correspondant à des sous parties différentes de l'image multi-spectrale (3), au moins une première fenêtre (300) de ladite pluralité comprenant le spot laser (8) et **en ce qu'**une deuxième fenêtre est sélectionnée suivant un critère prédéfini parmi les secondes fenêtres obtenues lors de chaque application de la procédure d'accentuation de contraste, la seconde fenêtre sélectionnée étant utilisée pour sélectionner la première bande spectrale.

11. Procédé selon l'une quelconque des revendications précédentes, **caractérisé en ce que** des caractéristiques de la première bande spectrale permettent de déterminer un type de dispositif laser (4).

12. Procédé de visualisation d'un spot laser (8) compris dans des images multi-spectrales acquises avec une fréquence d'images prédéfinie, caractérisé en que le procédé comprend :

mettre en œuvre le procédé selon l'une quelconque des revendications 1 à 11 pour chaque image multi-spectrale.

13. Procédé selon la revendication 10, **caractérisé en ce qu'**une position d'au moins une première fenêtre est définie dans une image multi-spectrale, dite image courante, en fonction d'une position d'une seconde fenêtre dans laquelle apparaît le spot laser (8) dans une image multi-spectrale précédent l'image courante.

14. Procédé selon la revendication 12 ou 13 lorsque le procédé selon la revendication 10 est mis en œuvre, **caractérisé en ce que**, une fréquence du spot laser (8) est déterminée sur une pluralité d'images multi-spectrales successives, la fréquence du spot laser (8) étant utilisée pour déterminer le type du dispositif laser (4).

15. Procédé selon la revendication 12, 13 ou 14 lorsque le procédé selon l'une quelconque des revendications 7 à 11 est mis en œuvre, **caractérisé en ce que** l'image permettant une visualisation du spot laser (8) est générée en alternant une insertion de la troisième ou la quatrième fenêtre dans une image réceptrice représentative du champ optique (7) avec une fréquence d'alternance prédéfinie inférieure ou égale à la fréquence d'image prédéfinie.

16. Dispositif (52) permettant une visualisation d'une anomalie (8) comprise dans une image (3) comprenant une pluralité de composantes et représentative d'un champ optique (7), le dispositif comprend :

     - des moyens d'obtenir (41) une image (3) dans laquelle chaque composante correspond à un même instant d'acquisition et est représentative d'une bande spectrale d'une pluralité de bandes spectrales couvrant de manière continue un domaine spectral comprenant ladite plage de longueurs d'onde;
     - des moyens d'application (43) d'une procédure d'accentuation de contraste à une première fenêtre (300) correspondant à une sous partie de l'image comprenant l'anomalie(8), la procédure d'accentuation de contraste comprenant :
     - des moyens de définition (430, 431) dans la première fenêtre (300) d'un premier masque adapté pour contenir des pixels de l'image correspondant à l'anomalie(8) et un second masque adapté pour contenir des pixels de l'image ne correspondant pas à l'anomalie(8) ; et,
     - des moyens de détermination (432) d'un vecteur représentatif d'une direction de projection de Fisher permettant d'accentuer un contraste entre les pixels du premier et du second masque et appliquer une projection selon ledit vecteur à la première fenêtre (300) pour obtenir une deuxième fenêtre;

     **caractérisé en ce que** l'anomalie est un spot laser produit par un dispositif laser (4) et ayant une longueur d'onde prenant des valeurs dans une plage de longueurs d'onde dépendant de températures de fonctionnement du dispositif laser (4), l'images est multi-spectrale et **en ce que** dispositif comprend : des moyens de sélection(46), si le spot laser (8) apparaît dans la deuxième fenêtre, d'une première bande spectrale offrant le meilleur contraste entre les pixels du premier et du second masque en utilisant au moins un résultat de la procédure d'accentuation de contraste, la bande spectrale sélectionnée correspondant à l'une des coordonnées du vecteur représentatif de la direction de projection de Fisher ayant une valeur supérieure aux autres valeurs de coordonnées, et former une troisième fenêtre à partir d'une composante de la première fenêtre correspondant à la première bande spectrale sélectionnée ;

     - des moyens de génération (47) d'une image permettant une visualisation du spot laser (8) en insérant la troisième fenêtre à une position correspondant à la première fenêtre dans une image réceptrice représentative du champ optique (7).

17. Programme d'ordinateur, **caractérisé en ce qu'**il comprend des instructions pour mettre en œuvre, par un dispositif (52), le procédé selon l'une quelconque des revendications 1 à 11 ou 12 à 15, lorsque ledit programme est exécuté par un processeur (521) dudit dispositif (52).

18. Moyens de stockage, **caractérisés en ce qu'**ils stockent un programme d'ordinateur comprenant des instructions pour mettre en œuvre, par un dispositif (52), le procédé selon l'une quelconque des revendications 1 à 11 ou 12 à 15, lorsque ledit programme est exécuté par un processeur (521) dudit dispositif (52).

**Patentansprüche**

1. Verfahren zur Sichtbarmachung einer Anomalie (8) in einem Bild (3), das eine Vielzahl von Komponenten enthält und für ein optisches Feld (7) repräsentativ ist, wobei das Verfahren enthält:

     Erhalt (41) eines Bilds (3), in dem jede Komponente dem gleichen Erfassungszeitpunkt entspricht und für ein Spektralband einer Vielzahl von Spektralbändern repräsentativ ist, die kontinuierlich einen Spektralbereich abdecken, der den Wellenlängenbereich enthält;
     Anwenden (43) einer Kontrastbetonungsprozedur an ein erstes Fenster (300) entsprechend einem Teilbereich des die Anomalie (8) enthaltenden Bilds, wobei die Kontrastbetonungsprozedur die enthält:

          Definieren (430, 431) einer ersten Maske im ersten Fenster (300), die geeignet ist, Pixel des Bilds zu enthalten, die der Anomalie (8) entsprechen, und einer zweiten Maske, die geeignet ist, Pixel des Bilds zu enthalten, die nicht der Anomalie (8) entsprechen; und

Bestimmen (432) eines für eine Fisher-Projektionsrichtung repräsentativen Vektors, die es ermöglicht, einen Kontrast zwischen den Pixeln der ersten und der zweiten Maske zu betonen und eine Projektion gemäß dem Vektor auf das erste Fenster (300) anzuwenden, um ein zweites Fenster zu erhalten;

**dadurch gekennzeichnet, dass** die Anomalie ein Laserfleck ist, der von einer Laservorrichtung (4) erzeugt wird und eine Wellenlänge hat, die Werte in einem Wellenlängenbereich abhängig von Betriebstemperaturen der Laservorrichtung (4) annimmt, wobei das Bild multispektral ist, und dass das Verfahren enthält:

wenn der Laserfleck (8) im zweiten Fenster erscheint, Auswahl (46) eines ersten Spektralbands, das den besseren Kontrast zwischen den Pixeln der ersten und der zweiten Maske bietet, unter Verwendung mindestens eines Ergebnisses der Kontrastbetonungsprozedur, wobei das ausgewählte Spektralband einer der Koordinaten des für die Fisher-Projektionsrichtung repräsentativen Vektors entspricht, die einen höheren Wert als die anderen Koordinatenwerte hat, und Formen eines dritten Fensters ausgehend von einer Komponente des ersten Fensters entsprechend dem ausgewählten ersten Spektralband;

Erzeugen (47) eines Bilds, das eine Sichtbarmachung des Laserflecks (8) erlaubt, durch Einfügen des dritten Fensters in eine Position entsprechend dem ersten Fenster in einem Empfangsbild, das für das optische Feld (7) repräsentativ ist.

2. Verfahren nach Anspruch 1, **dadurch gekennzeichnet, dass** ein Vergleich eines für einen Kontrast zwischen den Pixeln der ersten und der zweiten Maske im zweiten Fenster repräsentativen Werts mit einer ersten Schwelle es ermöglicht zu bestimmen, ob der Laserfleck (8) im zweiten Fenster erscheint.

3. Verfahren nach Anspruch 1 oder 2, **dadurch gekennzeichnet, dass** für einen Kontrast zwischen den Pixeln der ersten und der zweiten Maske in jedem Spektralband repräsentative Werte verwendet werden, um das Spektralband auszuwählen, das den besten Kontrast zwischen den Pixeln der ersten und der zweiten Maske bietet, wobei die für einen Kontrast repräsentativen Werte Werte von Koordinaten des Vektors enthalten.

4. Verfahren nach Anspruch 1, **dadurch gekennzeichnet, dass** die Koordinatenwerte des Vektors in einem vordefinierten Wertebereich normierte Koordinatenwerte sind.

5. Verfahren nach Anspruch 3 oder 4, **dadurch gekennzeichnet, dass** die für einen Kontrast repräsentativen Werte außerdem Signal-Rausch-Verhältnis-Werte enthalten, die für jedes Spektralband berechnet werden.

6. Verfahren nach Anspruch 3, 4 oder 5, **dadurch gekennzeichnet, dass** ein Auswahlwert für jedes Spektralband ausgehend von jedem für einen Kontrast entsprechend dem Spektralband repräsentativen Wert berechnet wird, wobei das erste Spektralband ausgewählt wird, indem ein Spektralband der Vielzahl von Spektralbändern genommen wird, das einem Auswahlwert zugeordnet ist, der der höchste unter den berechneten Auswahlwerten ist.

7. Verfahren nach einem der vorhergehenden Ansprüche, **dadurch gekennzeichnet, dass** das Verfahren die Auswahl eines zweiten Spektralbands, wobei das zweite Spektralband einem Kontrastwert zwischen den Pixeln der ersten und der zweiten Maske unter einer zweiten Schwelle zugeordnet ist, und das Formen eines vierten Fensters ausgehend von einer Komponente des ersten Fensters entsprechend dem zweiten ausgewählten Spektralband enthält, wobei das Bild, das eine Sichtbarmachung des Laserflecks (8) erlaubt, erzeugt wird, indem das dritte oder das vierte Fenster in ein Empfangsbild eingefügt wird, das für das optische Feld (7) repräsentativ ist.

8. Verfahren nach einem der vorhergehenden Ansprüche, **dadurch gekennzeichnet, dass** das multispektrale Bild ausgehend von einer Vielzahl von für das optische Feld (7) repräsentativen Miniaturbildern erzeugt wird, die den gleichen Erfassungszeitpunkt haben und räumlich harmonisiert sind, wobei jedes Miniaturbild einem Spektralband der Vielzahl von Teilspektralbändern entspricht.

9. Verfahren nach Anspruch 8, **dadurch gekennzeichnet, dass** mindestens zwei Miniaturbilder der Vielzahl von Miniaturbildern dem gleichen Spektralband entsprechen und für einen dem Spektralband entsprechenden Lichtstrahl repräsentativ sind, der gemäß einer anderen Polarisierung polarisiert ist, so dass bei der Auswahl des ersten Spektralbands, das den besten Kontrast zwischen den Pixeln der ersten und der zweiten Maske bietet, die den besten Kontrast zwischen den Pixeln der ersten und der zweiten Maske bietende Polarisierung auch ausgewählt

**10.** Verfahren nach einem der vorhergehenden Ansprüche, **dadurch gekennzeichnet, dass** die Kontrastbetonungsprozedur an eine Vielzahl von ersten Fenstern (300) angewendet wird, die unterschiedlichen Teilbereichen des multispektralen Bilds (3) entsprechen, wobei mindestens ein erstes Fenster (300) der Vielzahl den Laserfleck (8) enthält, und dass ein zweites Fenster gemäß einem vordefinierten Kriterium unter den zweiten Fenstern ausgewählt wird, die bei jeder Anwendung der Kontrastbetonungsprozedur erhalten werden, wobei das zweite ausgewählte Fenster verwendet wird, um das erste Spektralband auszuwählen.

**11.** Verfahren nach einem der vorhergehenden Ansprüche, **dadurch gekennzeichnet, dass** Merkmale des ersten Spektralbands es ermöglichen, einen Laservorrichtungstyp (4) zu bestimmen.

**12.** Verfahren zur Sichtbarmachung eines Laserflecks (8), der in multispektralen Bildern enthalten ist, die mit einer vordefinierten Bilderfrequenz erfasst werden, **dadurch gekennzeichnet, dass** das Verfahren enthält:
Durchführen des Verfahrens nach einem der Ansprüche 1 bis 11 für jedes multispektrale Bild.

**13.** Verfahren nach Anspruch 10, **dadurch gekennzeichnet, dass** eine Position mindestens eines ersten Fensters in einem multispektralen Bild, laufendes Bild genannt, abhängig von einer Position eines zweiten Fensters definiert wird, in dem der Laserfleck (8) in einem vor dem laufenden Bild liegenden multispektralen Bild auftritt.

**14.** Verfahren nach Anspruch 12 oder 13, wenn das Verfahren nach Anspruch 10 durchgeführt wird, **dadurch gekennzeichnet, dass** eine Frequenz des Laserflecks (8) bei einer Vielzahl von aufeinanderfolgenden multispektralen Bildern bestimmt wird, wobei die Frequenz des Laserflecks (8) verwendet wird, um den Typ der Laservorrichtung (4) zu bestimmen.

**15.** Verfahren nach Anspruch 12, 13 oder 14, wenn das Verfahren nach einem der Ansprüche 7 bis 11 durchgeführt wird, **dadurch gekennzeichnet, dass** das Bild, das die Sichtbarmachung des Laserflecks (8) erlaubt, erzeugt wird, indem eine Einfügung des dritten oder des vierten Fensters in ein für das optische Feld (7) repräsentatives Empfangsbild mit einer vordefinierten Wechselfrequenz niedriger als die oder gleich der vordefinierten Bildfrequenz erzeugt wird.

**16.** Vorrichtung (52), die eine Sichtbarmachung einer Anomalie (8) erlaubt, die in einem Bild (3) enthalten ist, das eine Vielzahl von Komponenten enthält und für ein optisches Feld (7) repräsentativ ist, wobei die Vorrichtung enthält:

- Einrichtungen zum Erhalt (41) eines Bilds (3), in dem jede Komponente dem gleichen Erfassungszeitpunkt entspricht und für ein Spektralband einer Vielzahl von Spektralbändern repräsentativ ist, die kontinuierlich einen Spektralbereich abdecken, der den Wellenlängenbereich enthält;
- Anwendungseinrichtungen (43) einer Kontrastbetonungsprozedur an ein erstes Fenster (300) entsprechend einem Teilbereich des die Anomalie (8) enthaltenden Bilds, wobei die Kontrastbetonungsprozedur enthält:
- Definitionseinrichtungen (430, 431) einer ersten Maske im ersten Fenster (300), die geeignet ist, um Pixel des der Anomalie (8) entsprechenden Bilds zu enthalten, und einer zweiten Maske, die geeignet ist, um Pixel des der Anomalie (8) nicht entsprechenden Bilds zu enthalten; und
- Bestimmungseinrichtungen (432) eines für eine Fisher-Projektionsrichtung repräsentativen Vektors, die es ermöglicht, einen Kontrast zwischen den Pixeln der ersten und der zweiten Maske zu betonen und eine Projektion gemäß dem Vektor an das erste Fenster (300) anzuwenden, um ein zweites Fenster zu erhalten;

**dadurch gekennzeichnet, dass** die Anomalie ein Laserfleck ist, der von einer Laservorrichtung (4) erzeugt wird und eine Wellenlänge hat, die Werte in einem Wellenlängenbereich abhängig von der Betriebstemperatur der Laservorrichtung (4) annimmt, wobei das Bild multispektral ist, und dass die Vorrichtung enthält:

- Auswahleinrichtungen (46), wenn der Laserfleck (8) im zweiten Fenster auftritt, eines ersten Spektralbands, das den besten Kontrast zwischen den Pixeln der ersten und der zweiten Maske bietet, indem mindestens ein Ergebnis der Kontrastbetonungsprozedur verwendet wird, wobei das ausgewählte Spektralband einer der Koordinaten des für die Fisher-Projektionsrichtung repräsentativen Vektors entspricht, die einen höheren Wert als die anderen Koordinatenwerte hat, und Formen eines dritten Fensters ausgehend von einer Komponente des ersten Fensters entsprechend dem ersten ausgewählten Spektralband;
- Einrichtungen zur Erzeugung (47) eines Bilds, das eine Sichtbarmachung des Laserflecks (8) erlaubt, indem das dritte Fenster in einer Position eingefügt wird, die dem ersten Fenster in einem Empfangsbild entspricht, das für das optische Feld (7) repräsentativ ist.

17. Computerprogramm, **dadurch gekennzeichnet, dass** es Anweisungen zur Durchführung, durch eine Vorrichtung (52), des Verfahrens nach einem der Ansprüche 1 bis 11 oder 12 bis 15 enthält, wenn das Programm von einem Prozessor (521) der Vorrichtung (52) ausgeführt wird.

18. Speichereinrichtungen, **dadurch gekennzeichnet, dass** sie ein Computerprogramm speichern, das Anweisungen zur Durchführung, durch eine Vorrichtung (52), des Verfahrens nach einem der Ansprüche 1 bis 11 oder 12 bis 15 enthält, wenn das Programm von einem Prozessor (521) der Vorrichtung (52) ausgeführt wird.

**Claims**

1. Method for viewing an anomaly (8) comprised in an image (3) comprising a plurality of components and representative of an optical field (7), the method comprising:

   obtaining (41) an image (3) in which each component corresponds to the same acquisition time and is representative of a spectral band of a plurality of spectral bands continuously covering a spectral domain comprising said wavelength range;
   applying (43) a contrast-accentuating procedure to a first window (300) corresponding to a sub-portion of the image comprising the anomaly (8), the contrast-accentuating procedure comprising:

   defining (430, 431) in the first window (300) a first mask suitable for containing pixels of the image corresponding to the anomaly (8) and a second mask suitable for containing pixels of the image not corresponding to the anomaly (8); and,
   determining (432) a vector representative of a Fisher-projection direction allowing a contrast between the pixels of the first and second masks to be accentuated, and applying a projection along said vector to the first window (300) in order to obtain a second window;

   **characterized in that** the anomaly is a laser spot produced by a laser device (4) and having a wavelength taking values in a wavelength range dependent on operating temperatures of the laser device (4), the image is multispectral, and **in that** the method comprises:
   if the laser spot (8) appears in the second window, selecting (46) a first spectral band providing the best contrast between the pixels of the first and second masks using at least one result of the contrast-accentuating procedure, the selected spectral band corresponding to one of the coordinates of the vector representative of the Fisher-projection direction having a value higher than the other coordinate values, and forming a third window from a component of the first window corresponding to the selected first spectral band;
   generating (47) an image allowing the laser spot (8) to be viewed by inserting the third window at a position corresponding to the first window in a receptor image representative of the optical field (7).

2. Method according to Claim 1, **characterized in that** a comparison of a value representative of a contrast between the pixels of the first and second masks in the second window with a first threshold allows it to be determined whether the laser spot (8) appears in the second window.

3. Method according to Claim 1 or 2, **characterized in that** values representative of a contrast between the pixels of the first and second masks in each spectral band are used to select the spectral band providing the best contrast between the pixels of the first and second masks, said values representative of a contrast comprising coordinate values of said vector.

4. Method according to Claim 1, **characterized in that** the coordinate values of said vector are normalized coordinate values in a predefined range of values.

5. Method according to Claim 3 or 4, **characterized in that** said values representative of a contrast furthermore comprise signal-to-noise ratio values computed for each spectral band.

6. Method according to Claim 3, 4 or 5, **characterized in that** a selection value is computed for each spectral band from each value representative of a contrast corresponding to said spectral band, the first spectral band being selected by taking the spectral band of the plurality of spectral bands that is associated with the highest selection value among the computed selection values.

7. Method according to any one of the preceding claims, **characterized in that** the method comprises selecting a second spectral band, said second spectral band being associated with a value of the contrast between the pixels of the first and second masks lower than a second threshold, and forming a fourth window from a component of the first window corresponding to the selected second spectral band, the image allowing the laser spot (8) to be viewed being generated by inserting the third or fourth window into a receptor image representative of the optical field (7).

8. Method according to any one of the preceding claims, **characterized in that** the multispectral image is generated from a plurality of small images that are representative of the optical field (7) having the same acquisition time and that are spatially harmonized, each small image corresponding to one spectral band of the plurality of spectral sub-bands.

9. Method according to Claim 8, **characterized in that** at least two small images of the plurality of small images correspond to the same spectral band and are representative of a light beam that corresponds to said spectral band and that is polarized with a different polarization, so that, during the selection of the first spectral band providing the best contrast between the pixels of the first and second masks, the polarization providing the best contrast between the pixels of the first and second masks is also selected.

10. Method according to any one of the preceding claims, **characterized in that** the contrast-accentuating procedure is applied to a plurality of first windows (300) corresponding to different sub-portions of the multispectral image (3), at least one first window (300) of said plurality comprising the laser spot (8) and **in that** a second window is selected according to a predefined criterion among the second windows obtained on each application of the contrast-accentuating procedure, the selected second window being used to select the first spectral band.

11. Method according to any one of the preceding claims, **characterized in that** characteristics of the first spectral band allow a type of laser device (4) to be determined.

12. Method for viewing a laser spot (8) comprised in multispectral images acquired with a predefined image frequency, **characterized in that** the method comprises:
     implementing the method according to any one of Claims 1 to 11 for each multispectral image.

13. Method according to Claim 10, **characterized in that** a position of at least one first window is defined in a multispectral image, called the current image, depending on a position of a second window in which the laser spot (8) appears in a multispectral image preceding the current image.

14. Method according to Claim 12 or 13 when the method according to Claim 10 is implemented, **characterized in that** a frequency of the laser spot (8) is determined in a plurality of successive multispectral images, the frequency of the laser spot (8) being used to determine the type of the laser device (4).

15. Method according to Claim 12, 13 or 14 when the method according to any one of Claims 7 to 11 is implemented, **characterized in that** the image allowing the laser spot (8) to be viewed is generated by alternating an insertion of the third or fourth window in a receptor image representative of the optical field (7) with a predefined alternation frequency lower than or equal to the predefined image frequency.

16. Device (52) allowing an anomaly (8) comprised in an image (3) comprising a plurality of components and representative of an optical field (7) to be viewed, the device comprising:

     - means for obtaining (41) an image (3) in which each component corresponds to the same acquisition time and is representative of a spectral band of a plurality of spectral bands continuously covering a spectral domain comprising said wavelength range;
     - means for applying (43) a contrast-accentuating procedure to a first window (300) corresponding to a sub-portion of the image comprising the anomaly (8), the contrast-accentuating procedure comprising:
     - means for defining (430, 431) in the first window (300) a first mask suitable for containing pixels of the image corresponding to the anomaly (8) and a second mask suitable for containing pixels of the image not corresponding to the anomaly (8); and,
     - means for determining (432) a vector representative of a Fisher-projection direction allowing a contrast between the pixels of the first and second masks to be accentuated, and applying a projection along said vector to the first window (300) in order to obtain a second window;

     **characterized in that** the anomaly is a laser spot produced by a laser device (4) and having a wavelength taking values in a wavelength range dependent on operating temperatures of the laser device (4), the image is multispectral, and **in that** the device comprises:

     - means for selecting (46), if the laser spot (8) appears in the second window, a first spectral band providing the best contrast between the pixels of the first and second masks using at least one result of the contrast-accentuating procedure, the selected spectral band corresponding to one of the coordinates of the vector representative of the Fisher-projection direction having a value higher than the other coordinate values, and forming a third window from a component of the first window corresponding to the selected first spectral band;
- means for generating (47) an image allowing the laser spot (8) to be viewed by inserting the third window at a position corresponding to the first window in a receptor image representative of the optical field (7).

17. Computer program, **characterized in that** it comprises instructions for implementing, with a device (52), the method according to any one of Claims 1 to 11 or 12 to 15, when said program is executed by a processor (521) of said device (52).

18. Storing means, **characterized in that** they store a computer program comprising instructions for implementing, with a device (52), the method according to any one of Claims 1 to 11 or 12 to 15, when said program is executed by a processor (521) of said device (52).

Fig. 1

Fig. 2A

Fig. 2B

Fig. 3A

Fig. 3B

Obtenir une image
multi-spectrale — 41

Définir une fenêtre
d'accentuation de — 42
contraste

Définir un masque — 430
cible

Définir un masque — 431
fond

Projection de — 432
Fisher

43

Normalisation — 44

49

Fin ← Détection ? — 45

Sélection d'une
bande spectrale — 46

Restitution — 47

Fig. 4

Fig. 5A

Fig. 5B

## RÉFÉRENCES CITÉES DANS LA DESCRIPTION

**Littérature non-brevet citée dans la description**

- Some practical issues in anomaly détection and exploitation of régions of interest in hyperspectral images. **GOUDAIL F et al.** applied opptics. optical society of America, 20 Juillet 2006, vol. 45

- **F. GOUDAIL et al.** some practical issues in anomaly detection and exploitation of regions of interest in hy-perspectral images. *applied optics,* vol. 45 (21), 5223-5236